(19) Europäisches Patentamt / European Patent Office / Office européen des brevets

(11) **EP 3 725 051 B1**

(12) **FASCICULE DE BREVET EUROPEEN**

(45) Date de publication et mention de la délivrance du brevet:
**04.08.2021 Bulletin 2021/31**

(21) Numéro de dépôt: **18833281.1**

(22) Date de dépôt: **13.12.2018**

(51) Int Cl.:
**H04L 25/03** (2006.01)   **H04L 27/26** (2006.01)

(86) Numéro de dépôt international:
**PCT/FR2018/053265**

(87) Numéro de publication internationale:
**WO 2019/115956 (20.06.2019 Gazette 2019/25)**

(54) **PROCÉDÉ DE GÉNÉRATION D'UN SIGNAL MULTIPORTEUSE, PROCÉDÉ DE DÉMODULATION, PRODUIT PROGRAMME D'ORDINATEUR ET DISPOSITIFS CORRESPONDANTS**

VERFAHREN ZUR ERZEUGUNG EINES MEHRTRÄGERSIGNALS, DEMODULATIONSVERFAHREN, COMPUTERPROGRAMMPRODUKT UND ENTSPRECHENDE VORRICHTUNGEN

METHOD FOR GENERATING A MULTICARRIER SIGNAL, DEMODULATION METHOD, COMPUTER PROGRAM PRODUCT AND CORRESPONDING DEVICES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.12.2017 FR 1762116**

(43) Date de publication de la demande:
**21.10.2020 Bulletin 2020/43**

(73) Titulaire: **ORANGE**
**92130 Issy-les-Moulineaux (FR)**

(72) Inventeurs:
• **LANOISELEE, Marc**
**CS 50010, 92326 CHÂTILLON CEDEX (FR)**
• **JAHAN, Bruno**
**CS 50010, 92326 CHÂTILLON CEDEX (FR)**

(74) Mandataire: **Vidon Brevets & Stratégie**
**16B, rue de Jouanet**
**BP 90333**
**35703 Rennes Cedex 7 (FR)**

(56) Documents cités:
• **HAO LIN: "Flexible Configured OFDM for 5G Air Interface", IEEE ACCESS, vol. 3, 1 janvier 2015 (2015-01-01), pages 1861-1870, XP055276445, DOI: 10.1109/ACCESS.2015.2480749**
• **BEHROUZ FARHANG-BOROUJENY: "OFDM Versus Filter Bank Multicarrier", IEEE SIGNAL PROCESSING MAGAZINE, IEEE SERVICE CENTER, PISCATAWAY, NJ, US, vol. 28, no. 3, 1 mai 2011 (2011-05-01), pages 92-112, XP011354670, ISSN: 1053-5888, DOI: 10.1109/MSP.2011.940267**

EP 3 725 051 B1

**Description**

**1 DOMAINE TECHNIQUE**

Le domaine de l'invention est celui de la transmission de données numériques via un signal multiporteuse.

Plus précisément, l'invention concerne une technique de génération d'un signal multiporteuse présentant des performances spectrales améliorées, par exemple par rapport à des signaux multiporteuse du type OFDM (pour « Orthogonal Frequency-Division Multiplexing » en anglais), ainsi qu'une technique de démodulation d'un tel signal.

De tels signaux sont largement utilisés dans le domaine de la transmission de données numériques par câble ou par radio sur fréquence porteuse RF. Ainsi, l'invention a de nombreuses applications, notamment, mais non exclusivement, dans les domaines des réseaux locaux sans-fil (WiFi), de la radiotéléphonie mobile cellulaire 3GPP LTE (de l'anglais « 3rd Generation Partnership Project » et « Long Term Evolution »), ou encore de l'ADSL (de l'anglais « Asymmetric Digital Subscriber Line »), mais aussi dans le domaine de la diffusion, telle que décrite par exemple dans les standards relatifs à la diffusion audio numérique (DAB pour « Digital Audio Broadcasting » en anglais), la télédiffusion numérique, dont notamment DVB-T (de l'anglais « Digital Video Broadcasting - Terrestrial ») ou DVB-T2, ou encore la diffusion par câble, notamment DVB-C (de l'anglais « Digital Video Broadcasting - Cable »).

**2 ARRIERE-PLAN TECHNOLOGIQUE**

Dans le domaine des communications numériques, la modulation OFDM s'est imposée depuis une vingtaine d'années comme la modulation de référence depuis son adoption dans les différents standards comme le DAB, DVB-T/T2, ADSL, 3GPP LTE, etc.

Les qualités intrinsèques de ce type de modulation par rapport aux modulations mono-porteuse, en termes d'encombrement spectral, de résistance aux canaux dispersifs dans le temps, et de simplicité de l'opération d'égalisation avec un coefficient par porteuse (méthode dite de « Zéro Forcing »), ont assuré son succès dans les standards précités.

L'intervalle de garde « Δ », qui consiste à rajouter une portion de signal entre deux blocs de symboles utiles, est un élément important de cette modulation. En effet, l'intervalle de garde permet d'absorber les échos provoqués par les réflexions multiples lors des transmissions radio. Il peut être utilisé pour effectuer une première synchronisation temporelle dite grossière du système et ainsi placer correctement la fenêtre FFT (pour « Fast Fourier Transform » en anglais) pour démoduler le signal.

Cependant, des limites de la modulation OFDM apparaissent, notamment en termes d'efficacité spectrale, face au besoin toujours croissant de débit ainsi qu'aux scénarii de plus en plus complexes qui apparaissent dans les nouveaux standards.

En effet, la localisation temporelle des symboles multiporteuses, encore appelés blocs OFDM, définie par une fenêtre rectangulaire dont la réponse fréquentielle est un sinus cardinal ne permet pas d'avoir un spectre aussi confiné que ce qu'exigent les cahiers des charges des nouveaux standards.

Des solutions alternatives ont été proposées. Notamment les modulations OFDM/OQAM (pour « Offset Quadrature Amplitude Modulation »). De telles modulations multiporteuse présentent des réponses spectrales bien mieux localisées en fréquence que l'OFDM.

Cependant, les modulations OFDM/OQAM ne permettent pas d'introduire d'intervalle de garde. Or, quand bien même l'absence d'un intervalle de garde permet d'augmenter l'efficacité spectrale de la modulation, une telle absence limite les capacités de la modulation à absorber les échos présents dans les canaux fortement dispersifs en temps.

Aussi des solutions pour introduire un intervalle de garde avec les modulations OFDM/OQAM ont été envisagées (par exemple celle divulguée dans la demande de brevet FR2928233 (A1)) mais avec une dégradation des qualités spectrales, ce qui limite ces modulations à des canaux peu dispersifs en temps.

Il existe ainsi un besoin pour une modulation multiporteuse présentant une efficacité spectrale améliorée par rapport aux modulations OFDM.

Il existe également un besoin pour qu'une telle modulation permette l'insertion d'un intervalle de garde.

Il existe enfin un besoin pour que la génération ainsi que la démodulation d'un signal modulé selon une telle modulation soient simples en termes d'implémentation matérielle. Le document HAO LIN: "Flexible Configured OFDM for 5G Air Interface" divulgue un procédé pour arriver à un fenêtrage sinusoïdal dans le domaine temporel par une combinaison de signaux effectuée dans le domaine fréquentiel (voir page 1864, colonne gauche).

**3 RESUME**

Dans un mode de réalisation de l'invention, il est proposé un procédé de génération d'un signal multiporteuse formé de symboles multiporteuses. Un tel procédé met en œuvre les étapes suivantes, pour la génération d'au moins un des symboles multiporteuses :

- obtention de N premiers symboles modulants et de N deuxièmes symboles modulants, à partir d'une séquence de symboles sources, l'obtention comprenant, pour au moins un des symboles sources d'indice k, une sous-étape de :
- combinaison linéaire d'une partie réelle, resp. imaginaire, du symbole source d'indice k avec une partie réelle, resp. imaginaire, d'un des symboles sources d'indice k +/- R, avec R un entier non nul, la combinaison linéaire délivrant au moins un premier, resp. deuxième, symbole combiné, au moins un des N premiers, resp. N deuxièmes, symboles modulants étant fonction de l'au moins un premier, resp. deuxième, symbole combiné ;
- transformation fréquence-temps, des N premiers symboles modulants, délivrant un premier bloc de N porteuses, chaque porteuse du premier bloc étant modulée par un des premiers symboles modulants, et des N deuxièmes symboles modulants, délivrant un deuxième bloc de N porteuses, chaque porteuse du deuxième bloc étant modulée par un des deuxièmes symboles modulants ; et
- génération du symbole multiporteuse à partir des premier et deuxième blocs de N porteuses.

Ainsi, l'invention propose une solution nouvelle et inventive pour permettre la génération d'un signal multiporteuse présentant une efficacité spectrale améliorée par rapport, par exemple, à un signal du type OFDM.

Pour ce faire, la méthode revendiquée propose de transformer les symboles sources en des symboles modulants obtenus par une combinaison linéaire de la partie réelle, resp. imaginaire, des symboles de la séquence de symboles sources avec la partie réelle, resp. imaginaire, des symboles de la même séquence mais décalés d'un retard R. Une telle combinaison linéaire effectuée dans le domaine fréquentiel, i.e. avant transformation fréquence-temps (e.g. avant transformation de Fourier inverse), implémente un fenêtrage sinusoïdal dans le domaine temporel. Le signal généré se trouve ainsi apodisé et son spectre amélioré.

Par ailleurs, le retard R définit le nombre de demi-périodes des fonctions sinusoïdales de fenêtrage qui sont présentes sur la durée du symbole multiporteuse généré (pour R égal à 1, on a une demi-période de sinusoïde, pour R égal à 2, on a une période de sinusoïde, pour R égal à 4, on a deux périodes, etc). Les zéros des fonctions sinusoïdales de fenêtrage obtenues pondèrent le début et la fin du symbole multiporteuse généré, améliorant par là-même son spectre.

Selon un mode de réalisation, l'étape d'obtention comprend en outre une sous-étape de rotation de phase appliquée à l'au moins un premier, resp. deuxième, symbole combiné, délivrant l'au moins un des N premiers, resp. N deuxièmes, symboles modulants.

Ainsi, les parties réelles et imaginaires des symboles transmis sont maintenues en quadrature malgré les traitements différentiés qui leur sont appliqués afin de générer le signal multiporteuse. De la sorte, les symboles transmis peuvent être aisément estimés en réception.

Selon un mode de réalisation, l'étape de génération comprend une sous-étape de synchronisation des premier et deuxième blocs de N porteuses délivrant des premier et deuxième blocs synchronisés. Le symbole multiporteuse est généré à partir des premier et deuxième blocs synchronisés.

Ainsi, les fonctions sinusoïdales pondérant les premier et deuxième blocs synchronisés sont mises en quadrature. De la sorte, les parties réelles et imaginaires des symboles transmis peuvent être aisément différentiées et estimées en réception. Par ailleurs, la puissance moyenne du signal multiporteuse ainsi généré n'est pas dégradée par le fenêtrage sinusoïdal en question.

Selon un mode de réalisation, l'étape de synchronisation comprend un décalage temporel du premier, resp. deuxième, bloc de N porteuses par rapport au deuxième, resp. premier, bloc de N porteuses délivrant les premier et deuxième blocs synchronisés.

Ainsi, la synchronisation des premier et deuxième blocs de N porteuses est mise en œuvre de manière simple et efficace.

Selon un mode de réalisation, l'étape de génération comprend une sous-étape de sommation des premier et deuxième blocs synchronisés, délivrant le symbole multiporteuse.

Selon un mode de réalisation, l'étape de génération comprend en outre une étape d'insertion d'un intervalle de garde, par duplication cyclique de p*(N/R) échantillons du premier, resp. deuxième, bloc de N porteuses, avec p un entier non nul et R un sous-multiple entier de N, délivrant des premier, resp. deuxième, bloc étendus de N porteuses. La sous-étape de synchronisation est appliquée aux premier et deuxième blocs étendus pour délivrer les premier et deuxième blocs synchronisés.

Ainsi, la durée de l'intervalle de garde est un multiple entier de la demi-période des fonctions sinusoïdales de fenêtrage. De la sorte, le spectre du signal multiporteuse obtenu reste amélioré quand bien même des intervalles de garde sont prévus dans les symboles multiporteuses.

Selon un mode de réalisation, la combinaison linéaire comprend une sommation ou une soustraction entre la partie réelle, resp. imaginaire, du symbole source d'indice k, et la partie réelle, resp. imaginaire, du symbole source d'indice k +/- R multipliée par un nombre imaginaire pur.

Ainsi, la propagation des erreurs de symbole estimé à symbole estimé lors de l'estimation des symboles sources en réception est réduite.

Dans un mode de réalisation de l'invention, il est proposé un procédé de démodulation d'un signal multiporteuse formé de symboles multiporteuses. Un tel procédé comprend les étapes suivantes :

- transformation temps-fréquence d'un jeu de N échantillons d'entrée obtenus à partir du signal multiporteuse, délivrant au moins N symboles modulants ; et
- estimation d'au moins un symbole source à partir de N premiers, resp. N deuxièmes, symboles modulants, obtenus à partir des au moins N symboles modulants, l'estimation comprenant, pour au moins un des N premiers, resp. N deuxièmes, symboles modulants d'indice k, une sous-étape de :
  - combinaison linéaire d'une partie imaginaire du symbole modulant d'indice k, avec une partie réelle d'un des N premiers, resp. N deuxièmes, symboles modulants d'indice k +/- R, avec R un entier non nul, la combinaison linéaire délivrant une partie réelle, resp. une partie imaginaire, d'un estimé de l'au moins un symbole source.

Ainsi, l'invention concerne également un procédé de démodulation d'un signal multiporteuse présentant une efficacité spectrale améliorée par rapport, par exemple, à un signal du type OFDM.

Pour ce faire, la méthode revendiquée propose d'implémenter une opération symétrique de celle de combinaison linéaire décrite ci-dessus en relation avec le procédé de génération d'un signal multiporteuse. Plus particulièrement, les traitements correspondants de combinaison linéaire de la partie réelle, resp. imaginaire, des séquences de symboles modulants obtenues en sortie de l'étape de transformation temps-fréquence (e.g. après transformée de Fourier directe) avec la partie réelle, resp. imaginaire, des symboles modulants des mêmes séquences, mais décalés du retard R, permettent l'estimation des symboles sources transmis.

Selon un mode de réalisation, le procédé de démodulation comprend en outre une étape d'obtention d'un jeu de N premiers échantillons et d'un jeu de N deuxièmes échantillons à partir d'au moins N échantillons d'entrée du signal multiporteuse. La transformation temps-fréquence est appliquée d'une part au jeu de N premiers échantillons, délivrant les N premiers symboles modulants, et d'autre part au jeu de N deuxièmes échantillons délivrant les N deuxièmes symboles modulants.

Selon un mode de réalisation, l'étape d'obtention comprend des sous-étapes de :

- duplication des au moins N échantillons d'entrée du signal multiporteuse délivrant un jeu d'au moins N premiers échantillons d'entrée et un jeu d'au moins N deuxièmes échantillons d'entrée ; et
- synchronisation des jeux d'au moins N premiers et d'au moins N deuxièmes échantillons d'entrée délivrant un jeu d'au moins N premiers échantillons synchronisés et un jeu d'au moins N deuxièmes échantillons synchronisés.

Les jeux de N premiers et N deuxièmes échantillons sont obtenus à partir des jeux d'au moins N premiers et N deuxièmes échantillons synchronisés.

Ainsi, la transformation temps-fréquence mise en œuvre en réception est appliquée sur les échantillons correspondant aux symboles sources du même symbole multiporteuse malgré la mise en quadrature des fonctions sinusoïdales de pondération lors de la génération du symbole multiporteuse en question comme décrit ci-dessus en relation avec le procédé de génération d'un signal multiporteuse.

Selon un mode de réalisation, la sous-étape de synchronisation comprend un décalage temporel du jeu d'au moins N premiers échantillons d'entrée, resp. du jeu d'au moins N deuxièmes échantillons d'entrée, par rapport au jeu d'au moins N deuxièmes échantillons d'entrée, resp. jeu d'au moins N premiers échantillons d'entrée, délivrant les jeux d'au moins N premiers et deuxièmes échantillons synchronisés.

Ainsi, la synchronisation des jeux d'au moins N premiers et N deuxièmes échantillons d'entrée est mise en œuvre de manière simple et efficace.

Selon un mode de réalisation, les au moins N premiers échantillons synchronisés, resp. au moins N deuxièmes échantillons synchronisés, sont N + p*(N/R) premiers échantillons synchronisés, resp. N + p*(N/R) deuxièmes échantillons synchronisés, avec p un entier naturel et R un sous-multiple entier de N. L'étape d'obtention comprend une sous-étape de suppression d'un intervalle de garde par suppression de p*(N/R) échantillons parmi les N + p*(N/R) premiers échantillons synchronisés, resp. parmi les N + p*(N/R) deuxièmes échantillons synchronisés, délivrant le jeu de N premiers échantillons, resp. le jeu de N deuxièmes échantillons.

Selon un mode de réalisation, l'étape de transformation temps-fréquence délivre les N premiers et N deuxièmes symboles modulants. Le procédé de démodulation comprend en outre une étape de rotation de phase appliquée aux N premiers, resp. N deuxièmes, symboles modulants délivrant N premiers, resp. N deuxièmes, symboles modulants déphasés. La sous-étape de combinaison linéaire est appliquée aux N premiers, resp. N deuxièmes, symboles modulants déphasés pour délivrer l'au moins un symbole source.

Ainsi, la rotation de phase appliquée lors de la génération du symbole multiporteuse comme décrit ci-dessus en relation avec le procédé de génération d'un signal multiporteuse est annulée de manière à améliorer l'estimation des symboles sources transmis.

Selon un mode de réalisation, le procédé de démodulation comprend en outre :

- une étape de rotation de phase appliquée aux au moins N symboles modulants délivrant N symboles modulants déphasés ; et
- une étape de duplication des N symboles modulants déphasés délivrant N premiers, resp. N deuxièmes, symboles modulants déphasés ;

la sous-étape de combinaison linéaire étant appliquée aux N premiers, resp. N deuxièmes, symboles modulants déphasés pour délivrer l'au moins un symbole source.

Ainsi, le procédé de démodulation peut être implémenté de manière simplifiée en ne mettant en œuvre qu'un seul bloc de transformation temps-fréquence (e.g. une seule transformée de Fourier directe). L'effet du décalage temporel lié à la mise en quadrature des fonctions sinusoïdales de pondération, obtenues lors de la génération du symbole multiporteuse en question, est annulé dans ce cas par un déphasage complémentaire des symboles modulants sur la base desquels est mise en œuvre l'une des deux combinaisons linéaires précitées.

L'invention concerne également au moins un programme d'ordinateur comprenant des instructions de code de programme pour la mise en œuvre d'au moins un procédé tel que décrit précédemment, selon l'un quelconque de ses différents modes de réalisation, lorsqu'il est exécuté sur un ordinateur.

Dans un autre mode de réalisation de l'invention, il est proposé un dispositif de génération d'un signal multiporteuse correspondant.

Un tel dispositif de génération est notamment apte à mettre en œuvre le procédé de génération d'un signal multiporteuse selon l'invention (selon l'un quelconque des différents modes de réalisation précités).

Ainsi, les caractéristiques et avantages de ce dispositif sont les mêmes que ceux du procédé de génération décrit précédemment. Par conséquent, ils ne sont pas détaillés plus amplement.

Dans un autre mode de réalisation de l'invention, il est proposé un dispositif de démodulation d'un signal multiporteuse correspondant.

Un tel dispositif de démodulation est notamment apte à mettre en œuvre le procédé de démodulation d'un signal multiporteuse selon l'invention (selon l'un quelconque des différents modes de réalisation précités).

Ainsi, les caractéristiques et avantages de ce dispositif sont les mêmes que ceux du procédé de démodulation décrit précédemment. Par conséquent, ils ne sont pas détaillés plus amplement.

## 4 LISTE DES FIGURES

D'autres caractéristiques et avantages de l'invention apparaîtront à la lecture de la description suivante, donnée à titre d'exemple indicatif et non limitatif, et des dessins annexés, dans lesquels :

- la figure 1 illustre les blocs fonctionnels d'un dispositif de génération d'un signal multiporteuse selon un mode de réalisation de l'invention ;
- la figure 2 illustre les étapes d'un procédé de génération d'un signal multiporteuse selon un mode de réalisation de l'invention ;
- les figures 3a et 3b illustrent des formes d'ondes temporelle et fréquentielle générées lors de la mise en œuvre du procédé de la figure 2 ;
- la figure 4A illustre les blocs fonctionnels d'un dispositif de démodulation d'un signal multiporteuse selon un mode de réalisation de l'invention ;
- la figure 4B illustre les blocs fonctionnels d'un dispositif de démodulation d'un signal multiporteuse selon un autre mode de réalisation de l'invention ;
- la figure 4C illustre les blocs fonctionnels d'un dispositif de démodulation d'un signal multiporteuse selon encore un autre mode de réalisation de l'invention ;
- la figure 5 illustre les étapes d'un procédé de démodulation d'un signal multiporteuse selon un mode de réalisation de l'invention.

## 5 DESCRIPTION DETAILLEE DE L'INVENTION

Sur toutes les figures du présent document, les éléments et étapes identiques sont désignés par une même référence.

Le principe général de la technique décrite consiste à générer un signal multiporteuse, en traitant de manière différentiée les parties réelle et imaginaire des symboles sources en entrée du modulateur.

Plus particulièrement, N premiers symboles modulants, resp. N deuxièmes symboles modulants sont obtenus sur la base d'une combinaison linéaire de la partie réelle, resp. imaginaire, d'une séquence de symboles sources avec la partie réelle, resp. imaginaire, de la même séquence de symboles sources mais décalée d'un retard R, avec R un entier non nul. Une transformation fréquence-temps, par exemple une transformée de Fourier inverse de taille N, est alors appliquée séparément sur les N premiers symboles modulants et sur les N deuxièmes symboles modulants pour délivrer un premier et un deuxième bloc de N porteuses. Les premier et deuxième blocs de N porteuses sont alors sommés afin de délivrer un symbole multiporteuse selon l'invention.

Il apparaît que la combinaison linéaire de la partie réelle, resp. imaginaire, d'un symbole source d'indice k de la séquence, avec un autre symbole source d'indice k +/- R de la séquence, implémenté dans le domaine fréquentiel, i.e. avant transformation fréquence-temps, un traitement correspondant à un fenêtrage sinusoïdal dans le domaine temporel. Une telle combinaison linéaire est mise en œuvre pour au moins certains symboles sources de la séquence, par exemple N symboles sources de la séquence. De la sorte, le spectre d'un symbole multiporteuse obtenu est amélioré via l'apodisation du signal temporel multi-porteuse ainsi généré.

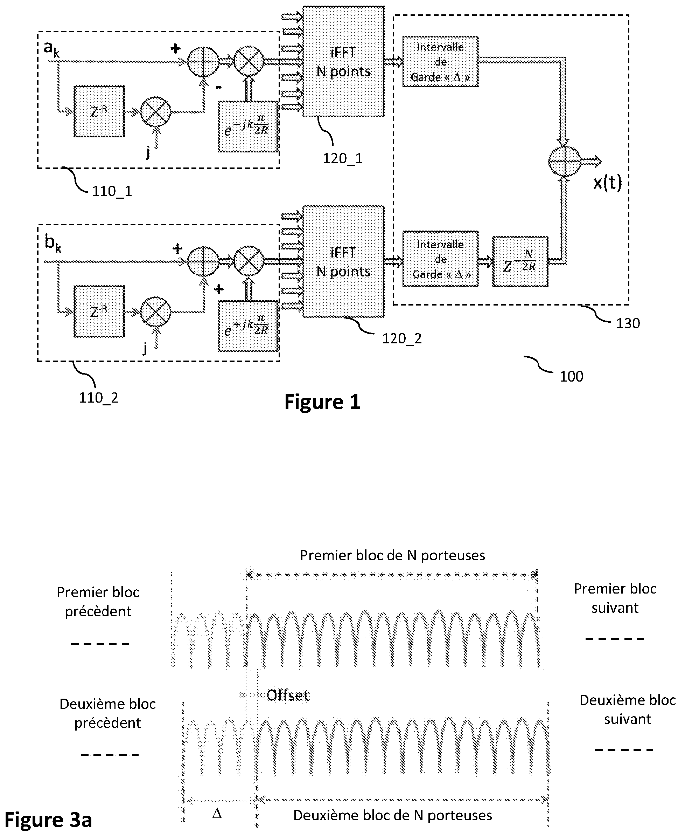

On décrit maintenant, en relation avec la **figure 1** les blocs fonctionnels d'un dispositif de génération d'un signal multiporteuse selon un mode de réalisation de l'invention mettant en œuvre l'insertion d'un intervalle de garde. On note que l'insertion d'un intervalle de garde est facultative selon l'invention.

Plus particulièrement, le signal multiporteuse comprend des symboles multiporteuses comprenant chacun N porteuses modulées par des symboles obtenus à partir de symboles sources appartenant à une constellation de symboles, un symbole source d'indice fréquentiel k s'exprimant comme $x_{(k)} = a_{(k)} + jb_{(k)}$. Il est compris que dans des variantes, certains des symboles sources sont mis à zéro de manière à éteindre les sous-porteuses correspondantes. C'est notamment le cas pour adresser certains standards (e.g. LTE) dans lesquels les sous-porteuses en bord de symbole multiporteuse (i.e. pour les sous-porteuses d'indice fréquentiel minimum et maximum) sont éteintes de manière à permettre la coexistence de différents signaux multiporteuses sur des canaux fréquentiels adjacents.

Pour générer un tel signal, le dispositif 100 de génération comprend tout d'abord deux blocs d'obtention de N symboles modulants à partir de la séquence de symboles sources :

- un premier bloc 110_1 d'obtention de N premiers $c_{(k)}^{1}$ symboles modulants à partir de la partie réelle de la séquence de symboles sources ; et

- un deuxième bloc 110_2 d'obtention de N deuxième $c_{(k)}^{2}$ symboles modulants à partir de la partie imaginaire de la séquence de symboles sources.

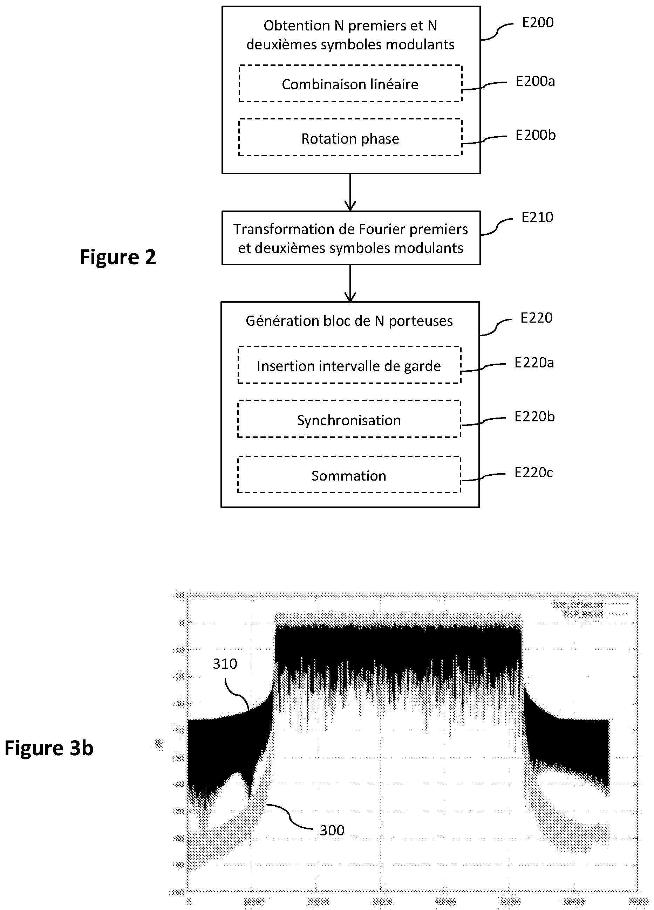

Pour ce faire, les premier 110_1 et deuxième 110_2 blocs d'obtention mettent par exemple en œuvre l'étape E200 d'obtention du procédé de génération d'un signal multiporteuse décrit ci-dessous en relation avec la figure 2.

Le dispositif 100 de génération comprend en outre, selon cet exemple, deux blocs de transformation de Fourier inverse, dont un premier bloc 120_1 appliqué aux N premiers symboles modulants $c_{(k)}^{1}$ obtenus à partir de la partie réelle de la séquence de symboles sources, et un deuxième bloc 120_2 appliqué aux N deuxièmes symboles modulants $c_{(k)}^{2}$ obtenus à partir de la partie imaginaire de la séquence de symboles sources.

Par exemple, les blocs de transformation de Fourier inverse mettent en œuvre l'étape E210 de transformation de Fourier inverse du procédé de génération d'un signal multiporteuse décrit ci-dessous en relation avec la figure 2.

Le dispositif 100 de génération comprend enfin un bloc 130 de génération d'un symbole multiporteuse du signal multiporteuse à partir des premier et deuxième blocs de N porteuses délivrés respectivement par les premier 120_1 et deuxième 120_2 blocs de transformation de Fourier inverse.

Pour ce faire, le bloc 130 de génération met par exemple en œuvre l'étape E220 de génération du procédé de génération d'un signal multiporteuse décrit ci-dessous en relation avec la figure 2.

Les différents blocs précités du dispositif 100 de génération peuvent être implémentés indifféremment sur une machine de calcul reprogrammable (un ordinateur PC, un processeur DSP, un microcontrôleur, etc) exécutant un programme comprenant une séquence d'instructions, ou sur une machine de calcul dédiée (par exemple un ensemble de portes logiques comme un FPGA ou un ASIC, ou tout autre module matériel) afin de mettre en œuvre le procédé de génération d'un signal multiporteuse décrit ci-dessous en relation avec la figure 2.

Dans le cas où le dispositif 100 de génération est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non (une mémoire, volatile ou non), ce médium de stockage étant lisible partiellement ou totalement par un ordinateur ou un processeur. A l'initialisation, les instructions de code du programme d'ordinateur sont par exemple chargées dans une mémoire vive avant d'être exécutées par un processeur de l'unité de traitement.

On décrit maintenant, en relation avec la **figure 2** les étapes d'un procédé de génération d'un signal multiporteuse selon un mode de réalisation de l'invention.

Plus particulièrement, les étapes suivantes sont décrites pour la génération d'un symbole multiporteuse du signal multiporteuse.

Lors d'une **étape E200,** N premiers $c_{(k)}^1$ et N deuxième $c_{(k)}^2$ symboles modulants sont obtenus sur la base de la séquence de symboles sources, par exemple en sortie des premier 110_1 et deuxième 110_2 blocs d'obtention du dispositif 100 de génération.

Pour ce faire, lors d'une **sous-étape E200a,** le premier bloc 110_1 d'obtention effectue une combinaison linéaire entre la partie réelle des symboles de la séquence de symboles sources et la partie réelle des symboles de la même séquence mais décalés d'un retard R. Par exemple, la valeur du retard R est une puissance de 2. Selon l'exemple illustré en figure 1, le premier bloc 110_1 d'obtention effectue une soustraction entre la partie réelle $a_{(k)}$ d'un symbole source $x_{(k)}$ d'indice fréquentiel k, k un entier compris entre R et N+R, et la partie réelle $a_{(k-R)}$ d'un symbole source $x_{(k-R)}$ d'indice fréquentiel k-R. Une telle soustraction, répétée pour chaque indice k compris entre R et N+R par exemple, délivre N premiers symboles combinés.

Dans une variante, la soustraction est implémentée entre la partie réelle $a_{(k)}$ d'un symbole source $x_{(k)}$ d'indice fréquentiel k, k un entier compris entre 1 et N, et la partie réelle $a_{(k+R)}$ d'un symbole source $x_{(k+R)}$ indice fréquentiel k+R. Une telle soustraction, répétée pour chaque indice k compris entre 1 et N, délivre alors les N premiers symboles combinés.

Il apparaît qu'une telle combinaison linéaire, entre les parties réelles des symboles, effectuée dans le domaine fréquentiel, i.e. avant transformation de Fourier inverse, implémente un fenêtrage sinusoïdal dans le domaine temporel, N/R représentant la demi-période (en nombre d'échantillons) de la sinusoïde en question.

En effet, la transformée de Fourier inverse d'une fonction sinusoïdale à la fréquence f0 est proportionnelle à $(\delta(f - f_0) - \delta(f + f_0))$. Ainsi, une convolution de la partie réelle des symboles sources par la distribution $(\delta(f - f_0) - \delta(f + f_0))$ permet d'obtenir une pondération du signal temporel, i.e. après transformation de Fourier inverse, par une telle fonction sinusoïdale.

Le signal généré se trouve ainsi apodisé et son spectre amélioré.

Par ailleurs, une telle convolution de la partie réelle $a_{(k)}$ des symboles sources $x_{(k)}$ conduit à une implémentation simple et efficace de la pondération recherchée sous la forme d'une combinaison linéaire de la forme précitée, i.e. : $a_{(k)} - a_{(k-R)}$.

Cependant, afin de minimiser la propagation des erreurs de symbole estimé à symbole estimé lors de l'estimation des symboles sources en réception, la partie réelle du symbole source d'indice fréquentiel k-R, i.e. $a_{(k-R)}$, peut être multipliée par le nombre imaginaire pur unité j avant d'être combinée (par exemple soustraite) à la partie réelle du symbole source d'indice fréquentiel k, i.e. $a_{(k)}$, afin que les parties réelles $a_{(k)}$ et $a_{(k-R)}$ soient déphasées de $\pi/2$. Par exemple, la partie réelle $a_{(k-R)}$ est déphasée en lui appliquant un terme de rotation de phase égal à $\pi/2$. On obtient ainsi le premier symbole combiné d'indice fréquentiel k.

Par ailleurs, lors d'une sous-étape E200b, les N premiers, resp. N deuxièmes, symboles modulants sont déterminés à partir d'au moins un premier, resp. deuxième, symbole combiné. Par exemple, le premier symbole combiné d'indice fréquentiel k est déphasé en lui appliquant un terme de rotation de phase, ici égal à $- k\pi/2R$, afin de délivrer le premier symbole modulant d'indice fréquentiel k, $c_{(k)}^1$.

De la sorte, la mise en œuvre de l'étape E200 par le premier bloc 110_1 d'obtention implémente l'opération :

$$c_{(k)}^1 = \left(a_{(k)} - j a_{(k-R)}\right) e^{-j 2 k \frac{\pi}{4R}} \qquad \text{(Eq-1)}$$

De même, le deuxième bloc 110_2 d'obtention effectue les mêmes types d'opérations sur les parties imaginaires $b_{(k)}$ des symboles sources $x_{(k)}$ afin de délivrer N deuxièmes symboles modulants $c_{(k)}^2$. Cependant, la mise en œuvre de l'étape E200 par le deuxième bloc 110_2 d'obtention implémente plus particulièrement l'opération :

$$c_{(k)}^2 = \left(b_{(k)} + j b_{(k-R)}\right) e^{+j 2 k \frac{\pi}{4R}} \qquad \text{(Eq-2)}$$

En effet, l'enveloppe de la transformée de Fourier de la fonction $A_{(k)} = \left(\delta_{(k)} - j \delta_{(k-R)}\right) e^{-j k \frac{\pi}{2R}}$ correspond à un sinus de fréquence normalisée $f_0 = \frac{R}{2}$ ainsi que pour la fonction $B_{(k)} = \left(\delta_{(k)} + j \delta_{(k-R)}\right) e^{+j k \frac{\pi}{2R}}$.

Par ailleurs, R est le nombre de demi-périodes de sinusoïde présentes sur la durée temporelle d'un symbole multiporteuse de N porteuses. De la sorte, à la fois le début et la fin du symbole multiporteuse courant sont atténués par des zéros de la fonction sinusoïdale, améliorant par là-même le spectre du signal multiporteuse ainsi généré.

Lors d'une **étape E210** de transformation de Fourier inverse, le premier bloc 120_1 de transformation de Fourier inverse du dispositif 100 de génération applique une transformation de Fourier inverse aux N premiers symboles modulants $c^1_{(k)}$ afin de délivrer un premier bloc de N porteuses. De même, le deuxième bloc 120_2 applique une transformation de Fourier inverse aux N deuxièmes symboles modulants $c^2_{(k)}$ afin de délivrer un deuxième bloc de N porteuses.

Enfin, lors d'une **étape E220,** le bloc 130 de génération du dispositif 100 de génération génère un symbole multiporteuse du signal multiporteuse à partir des premier et deuxième blocs de N porteuses délivrés respectivement par les premier 120_1 et deuxième 120_2 blocs de transformation de Fourier inverse lors de la mise en œuvre de l'étape E210. Par exemple, selon le mode de réalisation illustré en figure 1, lors d'une **sous-étape E220a,** un intervalle de garde est inséré. Pour ce faire, le bloc 130 de génération duplique cycliquement p*(N/R) échantillons du premier bloc de N porteuses afin de délivrer un premier bloc de N porteuses étendu. De même, le bloc 130 de génération duplique cycliquement p*(N/R) échantillons du deuxième bloc de N porteuses afin de délivrer un deuxième bloc de N porteuses étendu.

De la sorte, lorsque N est un multiple de R, la durée de l'intervalle de garde est un multiple entier de la demi-période de la fonction sinusoïdale de pondération. Ainsi, les début et fin des premier et deuxièmes blocs de N porteuses étendus restent atténués par des zéros de la fonction sinusoïdale. Le spectre du signal multiporteuse obtenu reste ainsi amélioré quand bien même des intervalles de garde sont prévus dans les symboles multiporteuses.

Par ailleurs, lors d'une **sous-étape E220b,** facultative, le bloc 130 effectue une synchronisation des premier et deuxième blocs de N porteuses étendus. Par exemple, le deuxième bloc de N porteuses étendu est retardé de $N/2R$ échantillons, i.e. d'un quart de période de sinusoïde, par rapport au premier bloc de N porteuses étendu. Des premier et deuxième blocs de N porteuses synchronisés sont ainsi délivrés.

Ainsi, les fonctions sinusoïdales pondérant les premier et deuxième blocs synchronisés sont mises en quadrature. De la sorte, les parties réelles et imaginaires des symboles sources peuvent être aisément différentiées et estimées en réception. Par ailleurs, la puissance moyenne du signal multiporteuse temporel ainsi généré n'est pas dégradé par le fenêtrage sinusoïdal, i.e. reste sensiblement constante sur la durée d'un symbole multiporteuse.

Dans des variantes, le retard appliqué au deuxième bloc de N porteuses étendu est différent de $N/2R$ échantillons.

Enfin, lors d'une **sous-étape E220c,** le bloc 130 effectue une sommation des premier et deuxième blocs de N porteuses synchronisés afin de générer le symbole multiporteuse.

On décrit maintenant, en relation avec les **figures 3a et 3b** des formes d'ondes temporelle et fréquentielle générées lors de la mise en œuvre du procédé de la figure 2.

Plus particulièrement, la figure 3a illustre une vue temporelle des premier et deuxième blocs de N porteuses tels qu'obtenus avant sommation.

Dans le présent exemple, le facteur R vaut 16. De la sorte, 16 demi-périodes de sinusoïdes sont présentes sur la durée des premier et deuxième blocs en question. Des zéros de la fonction sinusoïdale de pondération atténuent ainsi à la fois le début et la fin des premier et deuxième blocs de N porteuses.

Par ailleurs, les premiers et deuxième blocs de N porteuses étant décalés temporellement l'un par rapport à l'autre d'un délai égal à $N/2R,$ i.e. d'un quart de période de sinusoïde, suite à l'application de la sous-étape E220b, les fonctions sinusoïdales pondérant respectivement les premier et deuxième blocs de N porteuses sont en quadrature. De la sorte, les parties réelles et imaginaires des symboles sources peuvent être aisément différentiées et estimées en réception. Par ailleurs, la puissance moyenne du signal multiporteuse ainsi généré n'est pas dégradé par le fenêtrage sinusoïdal en question.

Par exemple, comme illustré sur la figure 3a, l'intervalle de garde, Δ, s'étend sur une durée égale à 4 demi-périodes de la fonction sinusoïdale de pondération. En d'autres termes, l'intervalle de garde Δ est composé de 4*(N/R) échantillons dupliqués cycliquement à partir des premier et deuxième blocs de N porteuses respectivement. De la sorte, le spectre 300 (figure 3b) le symbole multiporteuse obtenu après sommation des premier et deuxième blocs reste amélioré par rapport au spectre 310 d'un signal OFDM comprenant un même nombre de porteuses. Ceci reste vrai quand bien même des intervalles de garde sont prévus dans le symbole multiporteuse courant et les symboles multiporteuses précédent ou suivant.

On note que la longueur de l'intervalle n'est pas nécessairement égale à 4 demi-périodes de la fonction sinusoïdale de pondération. Notamment, la longueur de l'intervalle de garde peut être configurée en fonction de la dispersion du canal, i.e. de la longueur des échos.

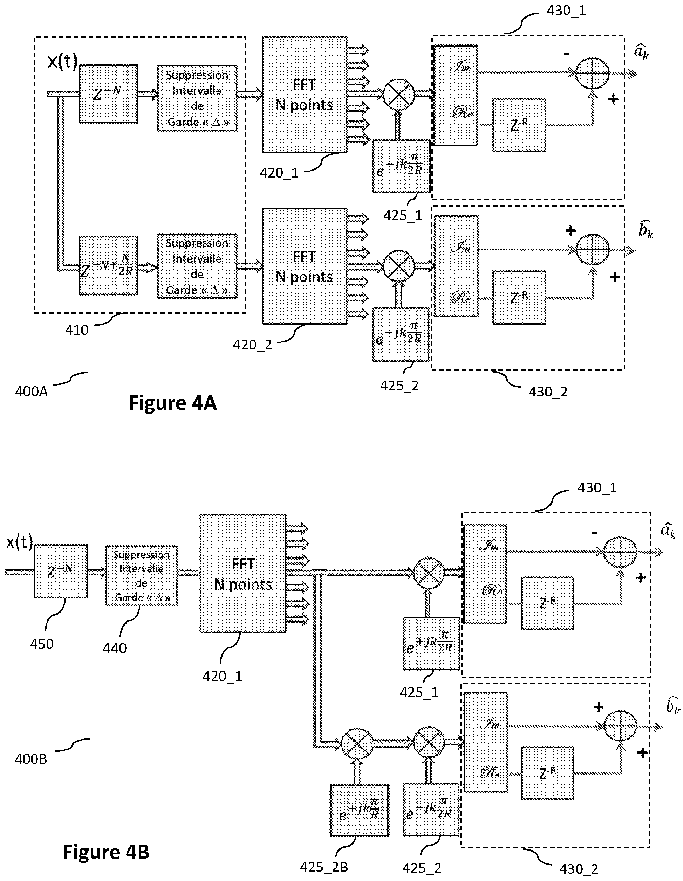

On décrit maintenant, en relation avec les **figures 4A** à **4C,** les blocs fonctionnels d'un dispositif de démodulation d'un signal multiporteuse généré selon le procédé de génération décrit ci-dessus en relation avec la figure 2, selon différents modes de réalisation.

Le premier dispositif, illustré en **figure 4A,** est adapté pour démoduler un signal multiporteuse transmis avec ou sans intervalle de garde.

Le dispositif 400A de démodulation comprend tout d'abord un bloc 410 d'obtention d'un jeu de N premiers échantillons et d'un jeu de N deuxièmes échantillons à partir de N + p*(N/R) échantillons d'entrée du signal multiporteuse en question.

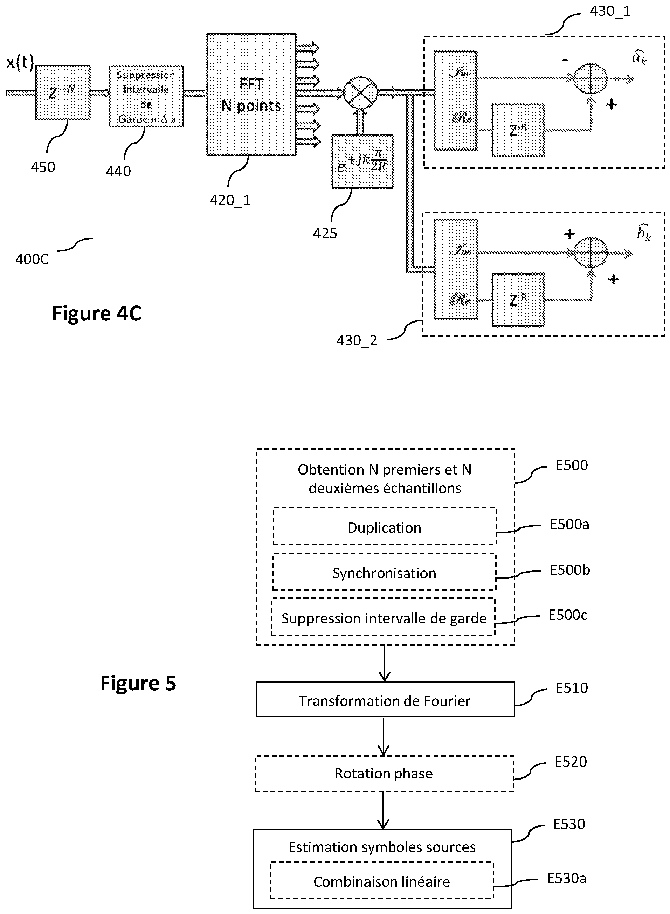

Pour ce faire, le bloc 410 d'obtention met par exemple en œuvre l'étape E500 d'obtention du procédé de démodulation d'un signal multiporteuse décrit ci-dessous en relation avec la figure 5.

Le dispositif 400A de génération comprend également deux blocs de transformation de Fourier, dont un premier bloc 420_1 appliqué aux N premiers échantillons, délivrant N premiers symboles modulants, et un deuxième bloc 420_2 appliqué aux N deuxièmes échantillons, délivrant N deuxièmes symboles modulants.

Par exemple, les blocs de transformation de Fourier mettent en œuvre l'étape E510 de transformation de Fourier du procédé de démodulation d'un signal multiporteuse décrit ci-dessous en relation avec la figure 5.

Le dispositif 400A de démodulation comprend également deux blocs de rotation de phase, dont un premier bloc 425_1 appliquant un premier déphasage aux N premiers symboles modulants, délivrant N premiers symboles modulants déphasés, et un deuxième bloc 425_2 appliquant un deuxième déphasage aux N deuxièmes symboles modulants, délivrant N deuxièmes symboles modulants déphasés.

Par exemple, les premier et deuxième blocs de rotation de phase mettent en œuvre l'étape E520 de rotation de phase du procédé de démodulation d'un signal multiporteuse décrit ci-dessous en relation avec la figure 5.

Le dispositif 400A de démodulation comprend enfin deux blocs d'estimation de N symboles sources véhiculés par le signal multiporteuse considéré, dont un premier bloc 430_1 d'estimation de N symboles sources à partir des N premiers symboles modulants déphasés et un deuxième bloc 430_2 d'estimation de N symboles sources à partir des N deuxièmes symboles modulants déphasés.

Par exemple, les premier 430_1 et deuxième 430_2 blocs d'estimation mettent en œuvre l'étape E530 d'estimation du procédé de démodulation d'un signal multiporteuse décrit ci-dessous en relation avec la figure 5.

On décrit maintenant, en relation avec les **figures 4B et 4C** les blocs fonctionnels, selon d'autres modes de réalisation de l'invention, d'un dispositif de démodulation d'un signal multiporteuse généré selon le procédé de génération décrit ci-dessus en relation avec la figure 2.

Plus particulièrement, les dispositifs 400B et 400C de démodulation sont adaptés à la démodulation d'un signal multiporteuse dont les symboles multiporteuses comprennent un intervalle de garde. En d'autres termes, le signal multiporteuse considéré est généré lorsque le procédé de génération de la figure 2 met en œuvre la sous-étape E220a d'insertion d'un intervalle de garde.

Les dispositifs de démodulation 400B et 400C, illustrés en figures 4B et 4C, mettent en œuvre un seul bloc de transformation de Fourier 420_1, appliqué à un jeu de N échantillons d'entrée obtenus à partir du signal multiporteuse et délivrant N symboles modulants.

Par exemple, un tel bloc de transformation de Fourier 420_1 met en œuvre l'étape E510 du procédé de démodulation de la figure 5.

Plus particulièrement, dans le mode de réalisation illustré sur la figure 4B, on duplique les N symboles modulants obtenus en sortie du bloc de transformation de Fourier 420_1, délivrant N premiers symboles modulants et N deuxième symboles modulants.

Le dispositif 400B de démodulation comprend également deux blocs de rotation de phase, dont le premier bloc 425_1 appliquant un premier déphasage aux N premiers symboles modulants, délivrant N premiers symboles modulants déphasés, et le deuxième bloc 425_2 appliquant un deuxième déphasage aux N deuxièmes symboles modulants, délivrant N deuxièmes symboles modulants déphasés.

Un déphasage supplémentaire est mis en œuvre dans un bloc supplémentaire de rotation de phase 425_2B, permettant de différentier les symboles traités par les premier 430_1 et deuxième 430_2 blocs d'estimation des symboles portés par le signal multiporteuse.

Afin de simplifier le démodulateur, dans le mode de réalisation illustré sur la figure 4C, les N symboles modulants délivrés par le bloc de transformation de Fourier 420_1 sont tout d'abord déphasés par un unique bloc de rotation de phase 425 avant d'être dupliqués pour alimenter les premier 430_1 et deuxième 430_2 blocs d'estimation des symboles mettant en œuvre l'étape E530 d'estimation du procédé de démodulation d'un signal multiporteuse décrit ci-dessous en relation avec la figure 5.

Par rapport au dispositif 400A, les dispositifs 400B et 400C ne comprennent pas de bloc 410 d'obtention d'un jeu de N premiers échantillons et d'un jeu de N deuxièmes échantillons en tant que tel. A contrario, le jeu de N échantillons d'entrée fourni au bloc de transformation de Fourier 420_1 est obtenu à partir d'un jeu d'au moins N échantillons du signal multiporteuse via un bloc 440 de suppression de l'intervalle de garde, ainsi que via un bloc 450 de décalage temporel, le cas échéant, lorsque nécessaire en termes d'implémentation matérielle.

Les différents blocs précités des dispositifs 400A, 400B et 400C de démodulation peuvent être implémentés indifféremment sur une machine de calcul reprogrammable (un ordinateur PC, un processeur DSP, un microcontrôleur, etc) exécutant un programme comprenant une séquence d'instructions, ou sur une machine de calcul dédiée (par exemple un ensemble de portes logiques comme un FPGA ou un ASIC, ou tout autre module matériel) afin de mettre en œuvre le procédé de démodulation d'un signal multiporteuse décrit ci-dessous en relation avec la figure 5.

Dans le cas où les dispositifs 400A, 400B et 400C de démodulation sont réalisés avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non (une mémoire, volatile ou non), ce médium de stockage étant lisible partiellement ou totalement par un ordinateur ou un processeur. A l'initialisation, les instructions de code du programme d'ordinateur sont par exemple chargées dans une mémoire vive avant d'être exécutées par un processeur de l'unité de traitement.

On décrit maintenant, en relation avec la **figure 5** les étapes d'un procédé de démodulation d'un signal multi-porteuse selon un mode de réalisation de l'invention.

Un tel procédé met en œuvre les opérations symétriques de celles du procédé de génération d'un signal multiporteuse décrit ci-dessus en relation avec la figure 2.

Si l'on considère, à titre d'exemple, le dispositif de démodulation illustré en figure 4A, lors d'une **étape E500,** le bloc 410 du dispositif 400 de démodulation obtient un jeu de N premiers échantillons et d'un jeu de N deuxièmes échantillons à partir de N + p*(N/R) échantillons d'entrée du signal multiporteuse en question.

Plus particulièrement, lors d'une **sous-étape E500a,** le bloc 410 duplique les N + p*(N/R) échantillons d'entrée du signal multiporteuse afin de délivrer un jeu de N + p*(N/R) premiers échantillons d'entrée et un jeu de N + p*(N/R) deuxièmes échantillons d'entrée.

Lors d'une **sous-étape E500b,** le bloc 410 d'obtention synchronise les jeux de N + p*(N/R) premiers et de N + p*(N/R) deuxièmes échantillons d'entrée afin de délivrer un jeu de N + p*(N/R) premiers échantillons synchronisés et un jeu de N + p*(N/R) deuxièmes échantillons synchronisés. Par exemple, le jeu de N + p*(N/R) premiers échantillons est retardé de $N/2R$ échantillons par rapport jeu de N + p*(N/R) deuxièmes échantillons. De la sorte, les fonctions sinusoïdales pondérant les premier et deuxième blocs synchronisés générés par le bloc 130 de génération décrit ci-dessus en relation avec la figure 1 sont remises en phase.

Enfin, lors d'une **sous-étape E500c,** le bloc 410 supprime l'intervalle de garde Δ par suppression de p*(N/R) échantillons parmi les N + p*(N/R) premiers échantillons synchronisés, resp. parmi les N + p*(N/R) deuxièmes échantillons synchronisés, délivrant le jeu de N premiers échantillons, resp. le jeu de N deuxièmes échantillons en question.

Lors d'une **étape E510,** le premier bloc 420_1 du dispositif 400 de démodulation applique une transformation de Fourier, ici directe, aux N premiers échantillons afin de délivrer N premiers symboles modulants. De même, le deuxième bloc 420_2 du dispositif 400 de démodulation applique une transformation de Fourier, également directe, aux N deuxièmes échantillons afin de délivrer N deuxièmes symboles modulants.

Lors d'une **étape E520,** le premier bloc 425_1 de rotation de phase ajoute un terme de rotation de phase, ici égal à $+k\pi/2R$, aux premiers symboles modulants afin de délivrer N premiers symboles modulants déphasés. Une telle opération permet d'annuler le terme de rotation de phase ajouté lors de la génération du signal multiporteuse comme décrit ci-dessus en relation avec la figure 2.

De manière similaire, le deuxième bloc 425_2 de rotation de phase ajoute un terme de rotation de phase, ici égal à $-k\pi/2R$, aux deuxièmes symboles modulants afin de délivrer N deuxièmes symboles modulants déphasés.

Lors d'une **étape E530,** N symboles sources véhiculés par le signal multiporteuse considéré sont estimés à partir des N premiers et des N deuxièmes symboles modulants.

Plus particulièrement, lors d'une **sous-étape E530a,** le premier bloc 430_1 d'estimation effectue une combinaison linéaire, par exemple une soustraction, entre la partie imaginaire d'un premier symbole modulant déphasé d'indice fréquentiel k, et la partie réelle d'un premier symbole modulant déphasé d'indice fréquentiel k-R. La combinaison linéaire en question délivre un estimé $\hat{a}_{(k)}$ de la partie réelle d'un des N symboles sources en question.

En effet, en référence à l'expression analytique du premier symbole modulant d'indice fréquentiel k donnée par l'équation (Eq-1) ci-dessus, l'expression d'un estimé du premier symbole modulant déphasé d'indice k, $\hat{c}^1_{(k)} e^{+j2k\frac{\pi}{4R}}$, est donc donnée par :

$$\hat{c}^1_{(k)} e^{+j2k\frac{\pi}{4R}} = \left( \hat{a}_{(k)} - j\hat{a}_{(k-R)} \right) \qquad \text{(Eq-3)}$$

Il apparaît ainsi que :

$$\Re\left( \hat{c}^1_{(k-R)} e^{+j2(k-R)\frac{\pi}{4R}} \right) - \Im\left( \hat{c}^1_{(k)} e^{+j2k\frac{\pi}{4R}} \right) = 2\hat{a}_{(k-R)}$$

Dans une variante, la soustraction est effectuée entre la partie imaginaire d'un premier symbole modulant déphasé d'indice fréquentiel k et la partie réelle d'un autre premier symbole modulant déphasé d'indice fréquentiel k+R.

De même, le deuxième bloc 430_2 d'estimation effectue les mêmes opérations que le bloc 430_1, mais sur les deuxièmes symboles modulants afin de délivrer un estimé $\hat{b}_{(k)}$ de la partie imaginaire des N symboles sources en question. Cependant, selon le mode de réalisation illustré, la combinaison linéaire implémentée dans le deuxième bloc 430_2 d'estimation correspond ici à une addition.

En effet, en référence à l'expression analytique du deuxième symbole modulant d'indice fréquentiel k donnée par l'équation (Eq-2) ci-dessus, l'expression d'un estimé du deuxième symbole modulant déphasé d'indice fréquentiel k, $\hat{c}^2_{(k)}e^{-j2k\frac{\pi}{4R}}$, est donnée par :

$$\hat{c}^2_{(k)}e^{-j2k\frac{\pi}{4R}} = \left(\hat{b}_{(k)} + j\hat{b}_{(k-R)}\right) \qquad \text{(Eq-4)}$$

Il apparaît ainsi que :

$$\Re\left(\hat{c}^2_{(k-R)}e^{-j2(k-R)\frac{\pi}{4R}}\right) + \Im\left(\hat{c}^2_{(k)}e^{-j2k\frac{\pi}{4R}}\right) = 2\hat{b}_{(k-R)}$$

Dans des modes de réalisation particuliers correspondant à une implémentation soit selon la figure 4B, soit selon la figure 4C du dispositif 400B ou 400C de démodulation mettant en œuvre le procédé de démodulation, l'étape E500 d'obtention n'est pas mise en œuvre. Ceci est notamment possible lorsque les symboles multiporteuses du signal multiporteuse comprennent un intervalle de garde.

En effet, l'intervalle de garde Δ :

- d'une part correspond à une duplication cyclique des premier et deuxième blocs synchronisés générés lors de la mise en œuvre de l'étape E220b du procédé de génération par le bloc 130 dont sont composés les symboles multiporteuses ; et
- d'autre part a une durée supérieure ou égale au décalage temporel correspondant à la mise en quadrature des fonctions sinusoïdales de pondération des premiers et deuxièmes blocs courants.

Il apparaît ainsi que la fenêtre de transformation de Fourier directe peut être placée sur les mêmes échantillons d'un symbole multiporteuse afin d'obtenir N symboles modulants contenant toute l'information des N premiers et N deuxièmes symboles modulants obtenus lors de la mise en œuvre de l'étape E200 du procédé de génération par les blocs 110_1 et 110_2.

Dans ce cas, l'effet du décalage temporel peut être compensé dans le domaine fréquentiel.

Dans le mode de réalisation correspondant à une implémentation selon la figure 4B du dispositif 400B de démodulation, une telle compensation est par exemple effectuée par une rotation de phase supplémentaire de +kπ/R, appliquée lors de l'étape E520 par le bloc de rotation de phase supplémentaire 425_2B décrit ci-dessus en relation avec la figure 4B.

Dans le mode de réalisation correspondant à une implémentation selon la figure 4C du dispositif 400C de démodulation, une telle compensation est par exemple effectuée au niveau d'une rotation de phase commune de +kπ/2R appliquée lors de l'étape E520 par l'unique bloc de rotation de phase 425 décrit ci-dessus en relation avec la figure 4C. Par ailleurs, dans ce mode de réalisation, le procédé met en œuvre une étape de duplication des N symboles modulants déphasés délivrant N premiers, resp. N deuxièmes, symboles modulants déphasés. De la sorte, la sous-étape de combinaison linéaire E530a est appliquée aux N premiers, resp. N deuxièmes, symboles modulants déphasés de manière à délivrer un estimé $\hat{a}_{(k)}$ de la partie réelle, resp. un estimé $\hat{b}_{(k)}$ de la partie imaginaire d'un des symboles sources porté par le signal multiporteuse démodulé.

Dans ces modes de réalisation, les dispositifs 400B et 400C de démodulation appliquent lors de l'étape E510 une seule transformation de Fourier, ici directe, à N échantillons d'entrée obtenus à partir du signal multiporteuse afin de délivrer les N symboles modulants. Plus particulièrement, selon les modes de réalisation en question, le jeu de N échantillons d'entrée fourni au bloc de transformation de Fourier 420_1 est obtenu par mise en œuvre :

- d'une étape de décalage temporel d'un jeu de N + p*(N/R) échantillons d'entrée délivrant un jeu de N + p*(N/R) échantillons synchronisés ; et
- d'une étape de suppression de l'intervalle de garde Δ par suppression de p*(N/R) échantillons parmi les N + p*(N/R) échantillons du jeu de N + p*(N/R) échantillons synchronisés.

Dans d'autres modes de réalisation non illustrés, la sous-étape E220a d'insertion d'un intervalle de garde n'est pas mise en œuvre par le dispositif 100 de génération. Dans ce cas, le bloc 130 effectue lors de la sous-étape E220b la synchronisation des premier et deuxième blocs de N porteuses (délivrés respectivement par les blocs 120_1 et 120_2) en lieu et place de la synchronisation des premier et deuxième blocs de N porteuses étendus. Le symbole multiporteuse est alors généré (par exemple par sommation) à partir des premier et deuxième blocs synchronisés ainsi obtenus à partir des premier et deuxième blocs de N porteuses. De manière symétrique, le dispositif 400A de démodulation n'implémente alors pas la sous-étape E500c de suppression de l'intervalle de garde.

Dans encore d'autres modes de réalisation non illustrés, le dispositif 100 de génération ne met pas en œuvre la sous-étape E220b de synchronisation. Dans ce cas, le bloc 130 génère le symbole multiporteuse (par exemple par sommation) directement à partir des premier et deuxième blocs de N porteuses (étendus ou non suivant que le mode de réalisation considéré met en œuvre ou non la sous-étape E220a d'insertion d'un intervalle de garde). De manière symétrique, le dispositif 400A de démodulation n'implémente alors pas la sous-étape E500b de synchronisation des jeux de premiers et de deuxièmes échantillons d'entrée.

**Revendications**

1. Procédé de génération d'un signal multiporteuse formé de symboles multiporteuses,
   **caractérisé en ce qu'**il met en œuvre les étapes suivantes, pour la génération d'au moins un desdits symboles multiporteuses :

   - **obtention** (E200) de N premiers symboles modulants et de N deuxièmes symboles modulants, à partir d'une séquence de symboles sources, ladite obtention comprenant, pour au moins un desdits symboles sources d'indice k, une sous-étape de :
   - **combinaison linéaire** (E200a) d'une partie réelle, resp. imaginaire, dudit symbole source d'indice k avec une partie réelle, resp. imaginaire, d'un desdits symboles sources d'indice k +/- R, avec R un entier non nul, ladite combinaison linéaire délivrant au moins un premier, resp. deuxième, symbole combiné,
   au moins un desdits N premiers, resp. N deuxièmes, symboles modulants étant fonction dudit au moins un premier, resp. deuxième, symbole combiné ;
   - **transformation fréquence-temps** (E210), desdits N premiers symboles modulants, délivrant un premier bloc de N porteuses, chaque porteuse dudit premier bloc étant modulée par un desdits premiers symboles modulants, et desdits N deuxièmes symboles modulants, délivrant un deuxième bloc de N porteuses, chaque porteuse dudit deuxième bloc étant modulée par un desdits deuxièmes symboles modulants ; et
   - **génération** (E220) dudit symbole multiporteuse à partir desdits premier et deuxième blocs de N porteuses.

2. Procédé selon la revendication 1,
   dans lequel ladite étape d'obtention comprend en outre une sous-étape de **rotation de phase** (E200b) appliquée audit au moins un premier, resp. deuxième, symbole combiné, délivrant ledit au moins un desdits N premiers, resp. N deuxièmes, symboles modulants.

3. Procédé selon la revendication 1 ou 2,
   dans lequel ladite étape de génération comprend une sous-étape de **synchronisation** (E220b) desdits premier et deuxième blocs de N porteuses délivrant des premier et deuxième blocs synchronisés,
   ledit symbole multiporteuse étant généré à partir desdits premier et deuxième blocs synchronisés.

4. Procédé selon la revendication 3,
   dans lequel ladite étape de génération comprend une sous-étape de **sommation** (E220c) desdits premier et deuxième blocs synchronisés délivrant ledit symbole multiporteuse.

5. Procédé selon la revendication 3 ou 4,
   dans lequel ladite étape de génération comprend en outre une étape **d'insertion** (E220a) d'un intervalle de garde par duplication cyclique de p*(N/R) échantillons dudit premier, resp. deuxième, bloc de N porteuses, avec p un entier non nul et R un sous-multiple entier de N, délivrant des premier, resp. deuxième, bloc étendus de N porteuses, ladite sous-étape de synchronisation étant appliquée auxdits premier et deuxième blocs étendus pour délivrer les premier et deuxième blocs synchronisés.

**6.** Procédé de génération selon la revendication 1 à 5,
dans lequel ladite combinaison linéaire comprend une sommation ou une soustraction entre ladite partie réelle, resp. imaginaire, dudit symbole source d'indice k, et ladite partie réelle, resp. imaginaire, dudit symbole source d'indice k +/- R multipliée par un nombre imaginaire pur.

**7.** Procédé de démodulation d'un signal multiporteuse formé de symboles multiporteuses,
**caractérisé en ce qu'**il comprend les étapes suivantes :

- **transformation temps-fréquence** (E510) d'un jeu de N échantillons d'entrée obtenus à partir dudit signal multiporteuse, délivrant au moins N symboles modulants ; et
- **estimation** (E530) d'au moins un symbole source à partir de N premiers, resp. N deuxièmes, symboles modulants, obtenus à partir desdits au moins N symboles modulants, ladite estimation comprenant, pour au moins un desdits N premiers, resp. N deuxièmes, symboles modulants d'indice k, une sous-étape de :

- **combinaison linéaire** (E530b) d'une partie imaginaire dudit symbole modulant d'indice k, avec une partie réelle d'un desdits N premiers, resp. N deuxièmes, symboles modulants d'indice k +/- R, avec R un entier non nul,
ladite combinaison linéaire délivrant une partie réelle, resp. une partie imaginaire, d'un estimé dudit au moins un symbole source.

**8.** Procédé selon la revendication 7,
comprenant en outre une étape **d'obtention** (E500) d'un jeu de N premiers échantillons et d'un jeu de N deuxièmes échantillons à partir d'au moins N échantillons d'entrée dudit signal multiporteuse,
et dans lequel ladite transformation temps-fréquence est appliquée d'une part audit jeu de N premiers échantillons, délivrant lesdits N premiers symboles modulants, et d'autre part audit jeu de N deuxièmes échantillons délivrant lesdits N deuxièmes symboles modulants.

**9.** Procédé selon la revendication 8,
dans lequel ladite étape d'obtention comprend des sous-étapes de :

- **duplication** (E500a) desdits au moins N échantillons d'entrée dudit signal multiporteuse délivrant un jeu d'au moins N premiers échantillons d'entrée et un jeu d'au moins N deuxièmes échantillons d'entrée ; et
- **synchronisation** (E500b) desdits jeux d'au moins N premiers et d'au moins N deuxièmes échantillons d'entrée délivrant un jeu d'au moins N premiers échantillons synchronisés et un jeu d'au moins N deuxièmes échantillons synchronisés ;

lesdits jeux de N premiers et N deuxièmes échantillons étant obtenus à partir desdits jeux d'au moins N premiers et N deuxièmes échantillons synchronisés.

**10.** Procédé selon la revendication 9,
dans lequel lesdits au moins N premiers échantillons synchronisés, resp. au moins N deuxièmes échantillons synchronisés, sont N + p*(N/R) premiers échantillons synchronisés, resp. N + p*(N/R) deuxièmes échantillons synchronisés, avec p un entier naturel et R un sous-multiple entier de N,
ladite étape d'obtention comprenant une sous-étape de **suppression** (E500c) d'un intervalle de garde par suppression de p*(N/R) échantillons parmi lesdits N + p*(N/R) premiers échantillons synchronisés, resp. parmi lesdits N + p*(N/R) deuxièmes échantillons synchronisés, délivrant ledit jeu de N premiers échantillons, resp. ledit jeu de N deuxièmes échantillons.

**11.** Procédé selon l'une quelconque des revendications 7 à 10,
dans lequel ladite étape de transformation temps-fréquence délivre lesdits N premiers et N deuxièmes symboles modulants,
le procédé comprenant en outre une étape de **rotation de phase** (E520) appliquée auxdits N premiers, resp. N deuxièmes, symboles modulants, délivrant N premiers, resp. N deuxièmes, symboles modulants déphasés,
ladite sous-étape de combinaison linéaire étant appliquée auxdits N premiers, resp. N deuxièmes, symboles modulants déphasés pour délivrer ledit au moins un symbole source.

**12.** Procédé selon la revendication 7,
comprenant en outre :

- une étape de rotation de phase (E520) appliquée auxdits au moins N symboles modulants, délivrant N symboles modulants déphasés ; et
- une étape de duplication des N symboles modulants déphasés, délivrant N premiers, resp. N deuxièmes, symboles modulants déphasés ;

ladite sous-étape de combinaison linéaire étant appliquée auxdits N premiers, resp. N deuxièmes, symboles modulants déphasés pour délivrer ledit au moins un symbole source.

13. Produit programme d'ordinateur comprenant des instructions de code de programme pour la mise en œuvre d'un procédé selon l'une quelconque des revendications 1 à 12, lorsque ledit programme est exécuté sur un ordinateur.

14. Dispositif (100) de génération d'un signal multiporteuse formé de symboles multiporteuses,
**caractérisé en ce qu'**il comprend, pour la génération d'au moins un desdits symboles multiporteuses :

- **des moyens d'obtention** (110_1, 110_2) de N premiers symboles modulants et de N deuxièmes symboles modulants, à partir d'une séquence de symboles sources; lesdits moyens d'obtention comprenant, pour au moins un desdits symboles sources d'indice k :

- **des moyens de combinaison linéaire** (110_1, 110_2) d'une partie réelle, resp. imaginaire, dudit symbole source d'indice k avec une partie réelle, resp. imaginaire, d'un desdits symboles sources d'indice k +/- R, avec R un entier non nul,

ladite combinaison linéaire délivrant au moins un premier, resp. deuxième, symbole combiné,
au moins un desdits N premiers, resp. N deuxièmes, symboles modulants étant fonction dudit au moins un premier, resp. deuxième, symbole combiné ;
- **des moyens de transformation fréquence-temps** (120_1, 120_2) desdits N premiers symboles modulants, délivrant un premier bloc de N porteuses, chaque porteuse dudit premier bloc étant modulée par un desdits premiers symboles modulants, et desdits N deuxièmes symboles modulants, délivrant un deuxième bloc de N porteuses, chaque porteuse dudit deuxième bloc étant modulée par un desdits deuxièmes symboles modulants ; et
- **des moyens de génération** (130) dudit symbole multiporteuse à partir desdits premier et deuxième blocs de N porteuses.

15. Dispositif (400A, 400B, 400C) de démodulation d'un signal multiporteuse formé de symboles multiporteuses,
**caractérisé en ce qu'**il comprend :

- **des moyens de transformation temps-fréquence** (420_1, 420_2) d'un jeu de N échantillons d'entrée dudit signal multiporteuse délivrant au moins N symboles modulants ; et
- **des moyens d'estimation** (430_1, 430_2) d'au moins un symbole source à partir de N premiers, resp. N deuxièmes, symboles modulants, obtenus à partir desdits au moins N symboles modulants, lesdits moyens d'estimation comprenant, pour au moins un desdits N premiers, resp. N deuxièmes, symboles modulants d'indice k :

- **des moyens de combinaison linéaire** (430_1, 430_2) d'une partie imaginaire dudit symbole modulant d'indice k, avec une partie réelle d'un desdits N premiers, resp. N deuxièmes symboles modulants d'indice k +/- R, avec R un entier non nul,

ladite combinaison linéaire délivrant une partie réelle, resp. une partie imaginaire, d'un estimé dudit au moins un symbole source.

**Patentansprüche**

1. Verfahren zur Erzeugung eines von Mehrträgersymbolen gebildeten Mehrträgersignals,
**dadurch gekennzeichnet, dass** es zur Erzeugung mindestens eines der Mehrträgersymbole die folgenden Schritte durchführt:

- Erhalt (E200) von N ersten modulierenden Symbolen und von N zweiten modulierenden Symbolen ausgehend von einer Folge von Quellensymbolen, wobei der Erhalt für mindestens eines der Quellensymbole mit dem Index k einen Teilschritt enthält der:
- linearen Kombination (E200a) eines realen bzw. imaginären Teils des Quellensymbols mit dem Index k mit einem realen bzw. imaginären Teil eines der Quellensymbole mit dem Index k +/- R, mit R einer ganzen Zahl ungleich Null,
wobei die lineare Kombination mindestens ein erstes bzw. zweites kombiniertes Symbol liefert,
wobei mindestens eins der N ersten bzw. N zweiten modulierenden Symbole von dem mindestens einen ersten bzw. zweiten kombinierten Symbol abhängt;
- Frequenz/Zeit-Transformation (E210) der ersten N modulierenden Symbole, die einen ersten Block von N Trägern liefert, wobei jeder Träger des ersten Blocks durch eines der ersten modulierenden Symbole moduliert wird, und der zweiten N modulierenden Symbole, die einen zweiten Block von N Trägern liefert, wobei jeder Träger des zweiten Blocks von einem der zweiten modulierenden Symbole moduliert wird; und
- Erzeugung (E220) des Mehrträgersymbols ausgehend von den ersten und zweiten Blöcken von N Trägern.

2. Verfahren nach Anspruch 1, wobei der Schritt des Erhalts außerdem einen Teilschritt der Phasendrehung (E200b) enthält, der an das mindestens eine erste bzw. zweite kombinierte Symbol angewendet wird, die das mindestens eine der N ersten bzw. N zweiten modulierenden Symbole liefert.

3. Verfahren nach Anspruch 1 oder 2, wobei der Schritt der Erzeugung einen Teilschritt der Synchronisation (E220b) der ersten und zweiten Blöcke von N Trägern enthält, die erste und zweite synchronisierte Blöcke liefert, wobei das Mehrträgersymbol ausgehend von den ersten und zweiten synchronisierten Blöcken erzeugt wird.

4. Verfahren nach Anspruch 3, wobei der Schritt der Erzeugung einen Teilschritt der Summierung (E220c) der ersten und zweiten synchronisierten Blöcke enthält, die das Mehrträgersymbol liefert.

5. Verfahren nach Anspruch 3 oder 4, wobei der Schritt der Erzeugung außerdem einen Schritt der Einfügung (E220a) eines Schutzintervalls durch zyklische Duplizierung von p*(N/R) Tastproben des ersten bzw. zweiten Blocks von N Trägern enthält, mit p einer ganzen Zahl ungleich Null und R einem ganzzahligen Untervielfachen von N, die erste bzw. zweite erweiterte Blöcke von N Trägern liefert,
wobei der Teilschritt der Synchronisation an die ersten und zweiten erweiterten Blöcke angewendet wird, um die ersten und zweiten synchronisierten Blöcke zu liefern.

6. Erzeugungsverfahren nach Anspruch 1 bis 5, wobei die lineare Kombination eine Summierung oder eine Subtraktion zwischen dem realen bzw. imaginären Teil des Quellensymbols mit dem Index k und dem realen bzw. imaginären Teil des Quellensymbols mit dem Index k +/- R multipliziert mit einer rein imaginären Zahl enthält.

7. Demodulationsverfahren eines von Mehrträgersymbolen gebildeten Mehrträgersignals,
**dadurch gekennzeichnet, dass** es die folgenden Schritte enthält:

- Zeit/Frequenz-Transformation (E510) eines Satzes von ausgehend vom Mehrträgersignal N erhaltenen Eingangstastproben, die mindestens N modulierende Symbole liefert; und
- Schätzung (E530) mindestens eines Quellensymbols ausgehend von N ersten bzw. N zweiten modulierenden Symbolen, die ausgehend von den mindestens N modulierenden Symbolen erhalten werden, wobei die Schätzung für mindestens eines der N ersten bzw. N zweiten modulierenden Symbole mit dem Index k einen Teilschritt enthält von:
- einer linearen Kombination (E530b) eines imaginären Teil des modulierenden Symbols mit dem Index k mit einem realen Teil eines der N ersten bzw. N zweiten modulierenden Symbole mit dem Index k +/- R, mit R einer ganzen Zahl ungleich Null, wobei die lineare Kombination einen realen Teil bzw. einen imaginären Teil eines Schätzwerts des mindestens einen Quellensymbols liefert.

8. Verfahren nach Anspruch 7, das außerdem einen Schritt des Erhalts (E500) eines Satzes von N ersten Tastproben und eines Satzes von N zweiten Tastproben ausgehend von mindestens N Eingangstastproben des Mehrträgersignals enthält,
und wobei die Zeit/Frequenz-Transformation einerseits an den Satz von N ersten Tastproben, was die N ersten modulierenden Symbole liefert, und andererseits an den Satz von N zweiten Tastproben angewendet wird, was die N zweiten modulierenden Symbole liefert.

9. Verfahren nach Anspruch 8, wobei der Schritt des Erhalts Teilschritte enthält der:

- Duplizierung (E500a) der mindestens N Eingangstastproben des Mehrträgersignals, die einen Satz von mindestens N ersten Eingangstastproben und einen Satz von mindestens N zweiten Eingangstastproben liefert; und
- Synchronisation (E500b) der Sätze von mindestens N ersten und mindestens N zweiten Eingangstastproben, die einen Satz von mindestens N ersten synchronisierten Tastproben und einen Satz von mindestens N zweiten synchronisierten Tastproben liefert;

wobei die Sätze von N ersten und N zweiten Tastproben ausgehend von den Sätzen von mindestens N ersten und N zweiten synchronisierten Tastproben erhalten werden.

10. Verfahren nach Anspruch 9, wobei die mindestens N ersten synchronisierten Tastproben, bzw. mindestens N zweiten synchronisierten Tastproben $N + p*(N/R)$ erste synchronisierte Tastproben bzw. $N + p*(N/R)$ zweite synchronisierte Tastproben sind, mit p einer natürlichen ganzen Zahl und R einem ganzzahligen Untervielfachen von N, wobei der Schritt des Erhalts einen Teilschritt der Unterdrückung (E500c) eines Schutzintervalls durch Unterdrückung von $p*(N/R)$ Tastproben unter den $N + p*(N/R)$ ersten synchronisierten Tastproben bzw. unter den $N + p*(N/R)$ zweiten synchronisierten Tastproben enthält, die den Satz von N ersten Tastproben, bzw. den Satz von N zweiten Tastproben liefert.

11. Verfahren nach einem der Ansprüche 7 bis 10, wobei der Schritt der Zeit/Frequenz-Transformation die N ersten und N zweiten modulierenden Symbole liefert, wobei das Verfahren außerdem einen Schritt der Phasendrehung (E520) enthält, die an die N ersten bzw. N zweiten modulierenden Symbole angewendet wird, die N erste bzw. N zweite phasenverschobene modulierende Symbole liefert, wobei der Teilschritt der linearen Kombination an die N ersten bzw. N zweiten phasenverschobenen modulierenden Symbole angewendet wird, um das mindestens eine Quellensymbol zu liefern.

12. Verfahren nach Anspruch 7, das außerdem enthält:

- einen Schritt der Phasendrehung (E520) angewendet an die mindestens N modulierenden Symbole, die N phasenverschobene modulierende Symbole liefert; und
- einen Schritt der Duplizierung der N phasenverschobenen modulierenden Symbole, die N erste bzw. N zweite phasenverschobene modulierende Symbole liefert;

wobei der Teilschritt der linearen Kombination an die N ersten bzw. N zweiten phasenverschobenen modulierenden Symbole angewendet wird, um das mindestens eine Quellensymbol zu liefern.

13. Computerprogrammprodukt, das Programmcodeanweisungen zur Durchführung eines Verfahrens nach einem der Ansprüche 1 bis 12 enthält, wenn das Programme auf einem Computer ausgeführt wird.

14. Vorrichtung (100) zur Erzeugung eines von Mehrträgersymbolen gebildeten Mehrträgersignals, **dadurch gekennzeichnet, dass** sie zur Erzeugung mindestens eines der Mehrträgersymbole enthält:

- Einrichtungen (110_1, 110_2) zum Erhalt von N ersten modulierenden Symbolen und von N zweiten modulierenden Symbolen ausgehend von einer Folge von Quellensymbolen; wobei die Einrichtungen zum Erhalt für mindestens eines der Quellensymbole mit dem Index k enthalten:
- Einrichtungen zur linearen Kombination (110_1, 110_2) eines realen bzw. imaginären Teils des Quellensymbols mit dem Index k mit einem realen bzw. imaginären Teil eines der Quellensymbole mit dem Index k +/- R, mit R einer ganzen Zahl ungleich Null, wobei die lineare Kombination mindestens ein erstes bzw. zweites kombiniertes Symbol liefert, wobei mindestens eines der N ersten bzw. N zweiten modulierenden Symbole von dem mindestens einen ersten bzw. zweiten kombinierten Symbol abhängt;
- Einrichtungen zur Frequenz/Zeit-Transformation (120_1, 120_2) der N ersten modulierenden Symbole, die einen ersten Block von N Trägern liefert, wobei jeder Träger des ersten Blocks von einem der ersten modulierenden Symbole moduliert wird, und der N zweiten modulierenden Symbole, die einen zweiten Block von N Trägern liefert, wobei jeder Träger des zweiten Blocks von einem der zweiten modulierenden Symbole moduliert wird; und
- Einrichtungen zur Erzeugung (130) des Mehrträgersymbols ausgehend von den ersten und zweiten Blöcken von N Trägern.

15. Vorrichtung (400A, 400B, 400C) zur Demodulation eines von Mehrträgersymbolen gebildeten Mehrträgersignals,

**dadurch gekennzeichnet, dass** sie enthält:

- Einrichtungen zur Zeit/Frequenz-Transformation (420_1, 420_2) eines Satzes von N Eingangstastproben des Mehrträgersignals, die mindestens N modulierende Symbole liefert; und
- Einrichtungen zur Schätzung (430_1, 430_2) mindestens eines Quellensymbols ausgehend von N ersten bzw. N zweiten modulierenden Symbolen, die ausgehend von den mindestens N modulierenden Symbolen erhalten werden, wobei die Schätzeinrichtungen für mindestens eines der N ersten bzw. N zweiten modulierenden Symbole mit dem Index k enthalten:
- Einrichtungen zur linearen Kombination (430_1, 430_2) eines imaginären Teils des modulierenden Symbols mit dem Index k mit einem realen Teil eines der N ersten bzw. N zweiten modulierenden Symbole mit dem Index k +/- R, mit R einer ganzen Zahl ungleich Null,

wobei die lineare Kombination einen realen Teil bzw. einen imaginären Teil eines Schätzwerts des mindestens einen Quellensymbols liefert.

**Claims**

1. Method for generating a multicarrier signal formed of multicarrier symbols,
**characterized in that** it implements the following steps, in order to generate at least one of said multicarrier symbols:

- **obtaining** (E200) N first modulating symbols and N second modulating symbols, from a sequence of source symbols, said obtaining comprising, for at least one of said source symbols of index k, a sub-step of:

- **linearly combining** (E200a) a real part, respectively imaginary part, of said source symbol of index k with a real part, respectively imaginary part, of one of said source symbols of index k +/- R, where R is a nonzero integer,

said linear combination delivering at least one first, respectively second, combined symbol, at least one of said N first, respectively N second, modulating symbols being a function of said at least one first, respectively second, combined symbol;
- **frequency-time transforming** (E210) said N first modulating symbols, delivering a first block of N carriers, each carrier of said first block being modulated by one of said first modulating symbols, and said N second modulating symbols, delivering a second block of N carriers, each carrier of said second block being modulated by one of said second modulating symbols; and
- **generating** (E220) said multicarrier symbol from said first and second blocks of N carriers.

2. Method according to Claim 1,
wherein said obtaining step furthermore comprises a **phase rotation** sub-step (E200b) applied to said at least one first, respectively second, combined symbol, delivering said at least one of said N first, respectively N second, modulating symbols.

3. Method according to Claim 1 or 2,
wherein said generation step comprises a sub-step of **synchronizing** (E200b) said first and second blocks of N carriers delivering synchronized first and second blocks, said multicarrier symbol being generated from said synchronized first and second blocks.

4. Method according to Claim 3,
wherein said generation step comprises a sub-step of **summing** (E220c) said synchronized first and second blocks delivering said multicarrier symbol.

5. Method according to Claim 3 or 4,
wherein said generation step furthermore comprises a step of **inserting** (E220a) a guard interval by cyclically duplicating p*(N/R) samples of said first, respectively second, block of N carriers, where p is a nonzero integer and R is an integer sub-multiple of N, delivering extended first, respectively second, blocks of N carriers, said synchronization sub-step being applied to said extended first and second blocks in order to deliver the synchronized first and second blocks.

**6.** Generation method according to Claim 1 to 5,
wherein said linear combination comprises a summing operation or a subtraction operation between said real part, respectively imaginary part, of said source symbol of index k, and said real part, respectively imaginary part, of said source symbol of index k +/- R multiplied by a pure imaginary number.

**7.** Method for demodulating a multicarrier signal formed of multicarrier symbols,
**characterized in that** it comprises the following steps:

- **time-frequency transforming** (E510) a set of N input samples obtained from said multicarrier signal, delivering at least N modulating symbols; and
- **estimating** (E530) at least one source symbol from N first, respectively N second, modulating symbols, obtained from said at least N modulating symbols, said estimation comprising, for at least one of said N first, respectively N second, modulating symbols of index k, a sub-step of:

    - **linearly combining** (E530b) an imaginary part of said modulating symbol of index k with a real part of one of said N first, respectively N second, modulating symbols of index k +/- R, where R is a nonzero integer,

said linear combination delivering a real part, respectively an imaginary part, of an estimate of said at least one source symbol.

**8.** Method according to Claim 7,
furthermore comprising a step of **obtaining** (E500) a set of N first samples and a set of N second samples from at least N input samples of said multicarrier signal,
and wherein said time-frequency transformation is applied to said set of N first samples, delivering said N first modulating symbols, on the one hand, and to said set of N second samples delivering said N second modulating symbols, on the other hand.

**9.** Method according to Claim 8,
wherein said obtaining step comprises sub-steps of:

    - **duplicating** (E500a) said at least N input samples of said multicarrier signal delivering a set of at least N first input samples and a set of at least N second input samples; and
    - **synchronizing** (E500b) said sets of at least N first and of at least N second input samples delivering a set of at least N synchronized first samples and a set of at least N synchronized second samples;

said sets of N first and N second samples being obtained from said sets of at least N synchronized first and N synchronized second samples.

**10.** Method according to Claim 9,
wherein said at least N synchronized first samples, respectively at least N synchronized second samples, are N + p*(N/R) synchronized first samples, respectively N + p*(N/R) synchronized second samples, where p is a natural integer and R is an integer sub-multiple of N,
said obtaining step comprising a sub-step of **removing** (E500c) a guard interval by removing p*(N/R) samples from among said N + p*(N/R) synchronized first samples, respectively from among said N + p*(N/R) synchronized second samples, delivering said set of N first samples, respectively said set of N second samples.

**11.** Method according to any one of Claims 7 to 10, wherein said time-frequency transformation step delivers said N first and N second modulating symbols,
the method furthermore comprising a **phase rotation** step (E520) applied to said N first, respectively N second, modulating symbols, delivering N first, respectively N second, phase-offset modulating symbols,
said linear combination sub-step being applied to said N first, respectively N second, phase-offset modulating symbols in order to deliver said at least one source symbol.

**12.** Method according to Claim 7,
furthermore comprising:

    - a phase rotation step (E520) applied to said at least N modulating symbols, delivering N phase-offset modulating symbols; and

- a step of duplicating the N phase-offset modulating symbols, delivering N first, respectively N second, phase-offset modulating symbols,

said linear combination sub-step being applied to said N first, respectively N second, phase-offset modulating symbols in order to deliver said at least one source symbol.

13. Computer program product comprising program code instructions for implementing a method according to any one of Claims 1 to 12 when said program is executed on a computer.

14. Device (100) for generating a multicarrier signal formed of multicarrier symbols,
**characterized in that** it comprises, in order to generate at least one of said multicarrier symbols:

- **obtaining means** (110_1, 110_2) for obtaining N first modulating symbols and N second modulating symbols, from a sequence of source symbols; said obtaining means comprising, for at least one of said source symbols of index k:

  - **linear combination means** (110 1, 110 2) for linearly combining a real part, respectively imaginary part, of said source symbol of index k with a real part, respectively imaginary part, of one of said source symbols of index k +/- R, where R is a nonzero integer,

said linear combination delivering at least one first, respectively second, combined symbol, at least one of said N first, respectively N second, modulating symbols being a function of said at least one first, respectively second, combined symbol;
- **frequency-time transformation means** (120_1, 120 2) for frequency-time transforming said N first modulating symbols, delivering a first block of N carriers, each carrier of said first block being modulated by one of said first modulating symbols, and said N second modulating symbols, delivering a second block of N carriers, each carrier of said second block being modulated by one of said second modulating symbols; and
- **generation means** (130) for generating said multicarrier symbol from said first and second blocks of N carriers.

15. Device (400A, 400B, 400C) for demodulating a multicarrier signal formed of multicarrier symbols, **characterized in that** it comprises:

- **time-frequency transformation means** (420_1, 420_2) for time-frequency transforming a set of N input samples of said multicarrier signal, delivering at least N modulating symbols; and
- **estimation means** (430_1, 430 2) for estimating at least one source symbol from N first, respectively N second, modulating symbols, obtained from said at least N modulating symbols, said estimation means comprising, for at least one of said N first, respectively N second, modulating symbols of index k:

  - **linear combination means** (430_1, 430_2) for linearly combining an imaginary part of said modulating symbol of index k with a real part of one of said N first, respectively N second, modulating symbols of index k +/- R, where R is a nonzero integer,

said linear combination delivering a real part, respectively an imaginary part, of an estimate of said at least one source symbol.

120_1

110_1

j

120_2

110_2

130

100

**Figure 1**

Premier bloc de N porteuses

Premier bloc
précèdent

Premier bloc
suivant

Deuxième bloc
précèdent

Offset

Deuxième bloc
suivant

**Figure 3a**

$\Delta$

Deuxième bloc de N porteuses

**Figure 2**

| Obtention N premiers et N deuxièmes symboles modulants — E200 |
| Combinaison linéaire — E200a |
| Rotation phase — E200b |

Transformation de Fourier premiers et deuxièmes symboles modulants — E210

| Génération bloc de N porteuses — E220 |
| Insertion intervalle de garde — E220a |
| Synchronisation — E220b |
| Sommation — E220c |

**Figure 3b**

**Figure 4A**

400A

**Figure 4B**

400B

Figure 4C

Figure 5

**EP 3 725 051 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2928233 A1

**Littérature non-brevet citée dans la description**

- **HAO LIN.** *Flexible Configured OFDM for 5G Air Interface*